# EUROPEAN PATENT APPLICATION

(11) **EP 4 603 281 A1**
(43) Date of publication of application: **20.08.2025**
(21) Application number: 23877193.5
(22) Date of filing: 03.10.2023
(51) Int. Cl.: B32B 37/10, G02B 1/115, G02B 1/14, G02B 1/18

(54) **METHOD FOR PRODUCING LAMINATE AND DEVICE FOR PRODUCING LAMINATE**

(30) Priority: 11.10.2022 JP 2022163216
(71) Applicant: Dexerials Corporation, Shimotsuke-shi, Tochigi 323-0194 (JP)
(72) Inventor: ENDO, Takashi, Shimotsuke-shi, Tochigi 323-0194 (JP); HAGA, Takayuki, Shimotsuke-shi, Tochigi 323-0194 (JP)
(74) Representative: Lavoix
(86) International application number: PCT/JP2023/036053
(87) International publication number: WO 2024/080188

(57) **Abstract**

A method for producing a laminate includes a first step of pressing a lamination film having a base film and an inorganic layer laminated on the base film against a first intermediate point between a first end and a second end of a substrate using a pressing tool, and moving the pressing tool from the first intermediate point toward the first end while pressing the pressing tool against the lamination film, a second step of moving the pressing tool to a second intermediate point between the first end and the second end without pressing the pressing tool against the lamination film, and a third step of moving the pressing tool from the second intermediate point toward the second end while pressing the pressing tool against the lamination film.

## Description

### TECHNICAL FIELD

The present invention relates to a method for producing a laminate and a device for producing a laminate. Priority is claimed on Japanese Patent Application No. 2022-163216, filed October 11, 2022, the content of which is incorporated herein by reference.

### BACKGROUND ART

Anti-reflection films are used in various applications. For example, an anti-reflection film is bonded to a monitor glass of an in-vehicle liquid crystal panel, or the like. Anti-reflection films are bonded to a substrate such as glass.

For example, Patent Document 1 describes a bonding device for bonding a sheet member to a long film member.

### Citation List

### Patent Document

Patent Document 1: Japanese Unexamined Patent Application, First Publication No. 2018-185505

### SUMMARY OF INVENTION

### Technical Problem

When a lamination film having an inorganic layer is stuck to a substrate, cracks may occur in the lamination film when a pressing tool rides over an end portion of the substrate.

The present disclosure has been made in consideration of the above problems, and provides a method for producing a laminate and a device for producing a laminate that is capable of curbing occurrence of cracks during bonding.

### Solution to Problem

In order to solve the above problems, the present invention proposes the following means.

(1) A method for producing a laminate according to a first aspect includes a first step of pressing a lamination film having a base film and an inorganic layer laminated on the base film against a first intermediate point between a first end and a second end of a substrate using a pressing tool, and moving the pressing tool from the first intermediate point toward the first end while pressing the pressing tool against the lamination film, a second step of moving the pressing tool to a second intermediate point between the first end and the second end without pressing the pressing tool against the lamination film, and a third step of moving the pressing tool from the second intermediate point toward the second end while pressing the pressing tool against the lamination film.
(2) In the method for producing a laminate according to the above aspect, the second intermediate point may coincide with the first intermediate point.
(3) In the method for producing a laminate according to the above aspect, the second intermediate point may be closer to the first end than the first intermediate point.
(4) In the method for producing a laminate according to the above aspect, the second intermediate point may be closer to the second end than the first intermediate point.
(5) In the method for producing a laminate according to the above aspect, a bonding pressure per unit time between the lamination film and the substrate may be greater at the first intermediate point than at the first end.
(6) In the method for producing a laminate according to the above aspect, a bonding pressure per unit time between the lamination film and the substrate may be greater at the second intermediate point than at the second end.
(7) In the method for producing a laminate according to the above aspect, the substrate may have a width that is not constant in a second direction orthogonal to a first direction in which the first end and the second end are connected, a first portion may have a width in the second direction that is smaller than that of a second portion, and a bonding pressure per unit time between the lamination film and the substrate may be smaller at the first portion than at the second portion.
(8) In the method for producing a laminate according to the above aspect, the pressing tool may include a first roller configured to come into contact with the lamination film and a second roller configured to come into contact with the substrate.
(9) In the first step and the third step of the method for producing a laminate according to the above aspect, the bonding pressure applied by the pressing tool to bond the lamination film and the substrate may be 0.1 MPa or more and 0.5 MPa or less.
(10) A device for producing a laminate according to a second aspect includes a pressing tool configured to press a lamination film having a base film and an inorganic layer laminated on the base film against a substrate, and a control unit configured to control a relative position between the pressing tool and the substrate, wherein the control unit performs a first operation of pressing the pressing tool against a first intermediate point between a first end and a second end of the substrate, and moving the pressing tool from the first intermediate point toward the first end while pressing the pressing tool against the lamination film, a second operation of moving the pressing tool to a second intermediate point between the first end and the second end without pressing the pressing tool against the lamination film, and a third operation of moving the pressing tool from the second intermediate point toward the second end while pressing the pressing tool against the lamination film.

### Advantageous Effects of Invention

The method for producing a laminate and the device for producing a laminate according to this embodiment can curb the occurrence of cracks during bonding.

### BRIEF DESCRIPTION OF DRAWINGS

[FIG. 1] A cross-sectional view illustrating a lamination film according to an embodiment of the present invention.
[FIG. 2] A cross-sectional view illustrating a first step in a method for producing a laminate according to the embodiment.
[FIG. 3] A plan view illustrating the first step in the method for producing a laminate according to the embodiment.
[FIG. 4] A cross-sectional view illustrating a second step in the method for producing a laminate according to the embodiment.
[FIG. 5] A cross-sectional view illustrating a third step in the method for producing a laminate according to the embodiment.
[FIG. 6] A plan view illustrating the third step in the method for producing a laminate according to the embodiment.
[FIG. 7] A plan view illustrating another example of the third step in the method for producing a laminate according to the embodiment.
[FIG. 8] A plan view illustrating yet another example of the third step in the method for producing a laminate according to the embodiment.

### DESCRIPTION OF EMBODIMENTS

Hereinafter, this embodiment will be described in detail with reference to the drawings as appropriate. The drawings used in the following description may show characteristic portions of the present disclosure in an enlarged scale for the sake of convenience in order to make the features of the present disclosure easier to understand, and the dimensional ratios of each component may differ from the actual ones. The materials, dimensions, and the like exemplified in the following description are merely examples, and the present disclosure is not limited thereto and can be implemented with appropriate modifications within the scope that achieves effects thereof.

First, the directions are defined. A direction in which a pressing tool 30 moves is called a first direction. An x direction is an example of the first direction. In addition, in a plane in which a substrate 20 extends, a direction orthogonal to the first direction is referred to as a second direction. A y direction is an example of the second direction. A z direction is a direction orthogonal to the x direction and the y direction. The z direction coincides with a direction in which pressure is applied when a lamination film 10 and the substrate 20 are bonded together, for example.

### "Method for producing laminate"

A method for producing a laminate according to this embodiment has a first step, a second step, and a third step. In the method for producing a laminate according to this embodiment, the lamination film 10 is stuck to the substrate 20 to produce a laminate consisting of the lamination film 10 and the substrate 20.

The substrate 20 is, for example, glass, plastic, or the like. A bonding surface 20S of the substrate 20 to which the lamination film 10 is stuck may be flat or curved. When the bonding surface 20S is curved, the bonding surface 20S is curved, for example, in the z direction relative to the x direction. For example, in an xz cross section, the bonding surface 20S is curved such that a center thereof in the x direction is convex in a +z direction or a -z direction. A shape of the bonding surface 20S in a plan view is not particularly limited, and may be indefinite.

The lamination film 10 used is, for example, one size larger than the bonding surface 20S of the substrate 20. After the lamination film 10 is bonded to the substrate 20, an excess portion of the lamination film 10 protrudes from the periphery of the substrate 20. The excess portion of the lamination film 10 is cut and removed in a subsequent process.

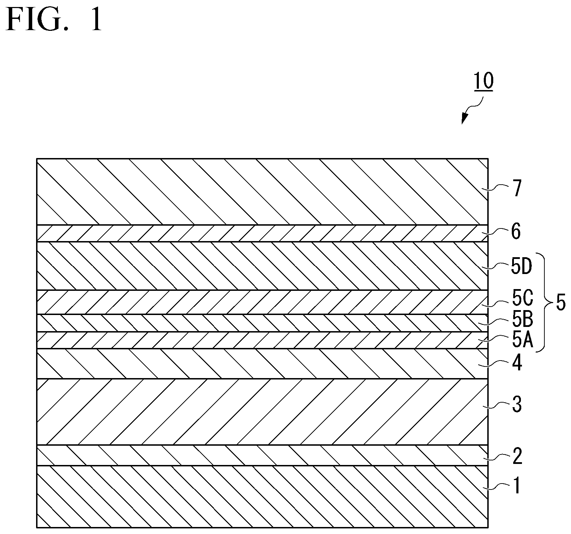

The lamination film 10 includes a base film and an inorganic layer laminated on the base film. FIG. 1 is a cross-sectional view of the lamination film 10 according to this embodiment. The lamination film 10 shown in FIG. 1 includes, for example, a release layer 1, an adhesive layer 2, a base film 3, a hard coat layer 4, an optical functional layer 5, a stain-resistant layer 6, and a protective layer 7. The optical functional layer 5 is an example of the inorganic layer.

The release layer 1 is a layer that protects the adhesive layer 2. The release layer 1 is peeled off at the time of sticking, and the adhesive layer 2 that is exposed by peeling off the release layer 1 is adhered to the substrate 20. The release layer 1 is, for example, a paper or a film coated with a release agent. A thickness of the release layer 1 is, for example, 70 µm or more and 80 µm or less.

The adhesive layer 2 is a layer that is adhered to the substrate 20. The adhesive layer 2 includes, for example, an acrylic adhesive, a silicone adhesive, or a urethane adhesive. A thickness of the adhesive layer 2 is, for example, 10 µm or more and 50 µm or less, and preferably 20 µm or more and 30 µm or less.

The base film 3 is, for example, a plastic film. Examples of materials for the plastic film include polyester-based resins, acetate-based resins, polyethersulfone-based resins, polycarbonate-based resins, polyamide-based resins, polyimide-based resins, polyolefin-based resins, (meth)acrylic-based resins, polyvinyl chloride-based resins, polyvinylidene chloride-based resins, polystyrene-based resins, polyvinyl alcohol-based resins, polyarylate-based resins, and polyphenylene-based sulfide resins.

The base film 3 is made of, for example, a polyester-based resin, an acetate-based resin, a polycarbonate-based resin, or a polyolefin-based resin. For example, a polyethylene terephthalate (PET) base material or a triacetyl cellulose (TAC) base material is suitably used as the base film 3.

A thickness of the base film 3 is, for example, 60 µm or more. When the thickness of the base film 3 is small, cracks may occur in the lamination film 10 due to bending of the film or the like. The thickness of the base film 3 is, for example, 1 mm or less, preferably 500 µm or less, and more preferably 300 µm or less. When the thickness of the base film 3 is too thick, transparency of the base film 3 decreases, and rigidity thereof increases, making the base film 3 more susceptible to cracking.

One surface of the base film 3 may be previously subjected to an etching treatment such as sputtering, corona discharge, ultraviolet irradiation, electron beam irradiation, conversion, and oxidation, and/or an undercoat treatment. By carrying out these treatments in advance, the adhesion of the hard coat layer 4 to be formed on the base film 3 is improved.

The hard coat layer 4 is formed on one surface of the base film 3. The hard coat layer 4 is not particularly limited, and any known hard coat layer may be used. The hard coat layer 4 may contain, for example, a binder resin and a filler. The hard coat layer 4 may further contain a leveling agent.

The binder resin is preferably transparent, and examples thereof include ionizing radiation curable resins that are resins cured by ultraviolet light or electron beams, thermoplastic resins, and thermosetting resins.

Examples of the ionizing radiation curable resin that is the binder resin include ethyl (meth)acrylate, ethylhexyl (meth)acrylate, styrene, methylstyrene, N-vinylpyrrolidone, and the like. The ionizing radiation curable resin may be a compound having two or more unsaturated bonds. Examples of the ionizing radiation curable resin having two or more unsaturated bonds include polyfunctional compounds such as trimethylolpropane tri(meth)acrylate, tripropylene glycol di(meth)acrylate, diethylene glycol di(meth)acrylate, dipropylene glycol di(meth)acrylate, pentaerythritol tri(meth)acrylate, pentaerythritol tetra(meth)acrylate, dipentaerythritol hexa(meth)acrylate, 1,6-hexanediol di(meth)acrylate, neopentyl glycol di(meth)acrylate, trimethylolpropane tri(meth)acrylate, ditrimethylolpropane tetra(meth)acrylate, dipentaerythritol penta(meth)acrylate, tripentaerythritol octa(meth)acrylate, tetrapentaerythritol deca(meth)acrylate, isocyanuric acid tri(meth)acrylate, isocyanuric acid di(meth)acrylate, polyester tri(meth)acrylate, polyester di(meth)acrylate, bisphenol di(meth)acrylate, diglycerol tetra(meth)acrylate, adamantyl di(meth)acrylate, isobornyl di(meth)acrylate, dicyclopentane di(meth)acrylate, tricyclodecane di(meth)acrylate, and ditrimethylolpropane tetra(meth)acrylate. Among them, pentaerythritol triacrylate (PETA), dipentaerythritol hexaacrylate (DPHA) and pentaerythritol tetraacrylate (PETTA) are preferably used as the binder resin. "(Meth)acrylate" refers to methacrylate and acrylate. Moreover, the ionizing radiation curable resin may be one obtained by modifying the above-described compounds with propylene oxide (PO), ethylene oxide (EO), caprolactone (CL), or the like. The ionizing radiation curable resin is preferably an acrylic-based ultraviolet curable resin composition.

Examples of the thermoplastic resin that is the binder resin include styrene-based resins, (meth)acrylic-based resins, vinyl acetate-based resins, vinyl ether-based resins, halogen-containing resins, alicyclic olefin-based resins, polycarbonate-based resins, polyester-based resins, polyamide-based resins, cellulose derivatives, silicone-based resins, and rubber or elastomers. The thermoplastic resin is non-crystalline and soluble in an organic solvent (particularly a common solvent capable of dissolving a plurality of polymers and curable compounds). In particular, from the viewpoint of transparency and weather resistance, the binder resin is preferably a styrene-based resin, a (meth)acrylic-based resin, an alicyclic olefin-based resin, a polyester-based resin, a cellulose derivative (such as cellulose esters), or the like.

The thermosetting resin that is the binder resin may be, for example, a phenol resin, a urea resin, a diallyl phthalate resin, a melamine resin, a guanamine resin, an unsaturated polyester resin, a polyurethane resin, an epoxy resin, an aminoalkyd resin, a melamine-urea co-condensation resin, a silicon resin, a polysiloxane resin (including so-called silsesquioxanes such as cage-shaped and ladder-shaped silsesquioxanes), or the like.

The hard coat layer 4 may contain an organic resin and an inorganic material, or may be an organic-inorganic hybrid material. One example is one formed by a sol-gel method. Examples of the inorganic material may include silica, alumina, zirconia, and titania. Examples of the organic material may include an acrylic resin.

The filler may be made of an organic substance, an inorganic substance, or a mixture of organic and inorganic substances. The filler contained in the hard coat layer 4 may be selected from various types according to the application of the lamination film 10 from the viewpoints of antiglare properties, adhesion to an optical functional layer 5 described below, antiblocking properties, and the like. Specifically, as the filler, for example, known particles such as silica (an oxide of Si) particles, alumina (an aluminum oxide) particles, and organic fine particles may be used.

When the filler is silica particles and/or alumina particles, an average particle size of the filler is, for example, 800 nm or less, preferably 100 nm or less, and more preferably 40 nm or more and 70 nm or less. When the filler is organic fine particles, an average particle size of the organic fine particles is, for example, 10 µm or less, preferably 5 µm or less, and more preferably 3 µm or less.

A thickness of the hard coat layer 4 is, for example, preferably 0.5 µm or more, and more preferably 1 µm or more. The thickness of the hard coat layer 4 is preferably 100 µm or less. The hard coat layer 4 may be made of a single layer, or may be made of a laminate of a plurality of layers.

The optical functional layer 5 is a layer that exhibits an optical function. The optical function is a function that controls the properties of light, such as reflection, transmission, and refraction, and examples thereof include an anti-reflection function, a selective reflection function, an antiglare function, a lens function, and the like.

The optical functional layer 5 is, for example, a lamination film in which a high refractive index layer and a low refractive index layer are alternately laminated in this order from the side of the hard coat layer 4. The high refractive index layer has a higher refractive index than the low refractive index layer. The refractive indexes of the high refractive index layers may be the same or different. The refractive indexes of the low refractive index layers may be the same or different.

There is no particular limit to the total number of low refractive index layers and high refractive index layers laminated in the optical functional layer 5. For example, as shown in FIG. 1, the number of laminated layers may be four, three or less, or five or more. The total number of low refractive index layers and high refractive index layers in the optical functional layer 5 is preferably four layers or more and ten layers or less, more preferably four layers or more and six layers or less, and most preferably four layers. When the optical functional layer 5 has four laminated layers, since the number of laminated layers is small and the thickness is thin, productivity is excellent compared to when the optical functional layer 5 has five or more laminated layers.

The optical functional layer 5 exhibits an anti-reflection function by interference of light reflected at each interface in a laminate in which the high refractive index layers and the low refractive index layers are alternately laminated, and by diffusing light incident from the side of the stain-resistant layer 6.

A total thickness of the optical functional layer 5 is, for example, 100 µm or more and 800 µm or less.

Hereinafter, an example will be described in which the optical functional layer 5 is a laminate including four layers including a first high refractive index layer 5A, a first low refractive index layer 5B, a second high refractive index layer 5C, and a second low refractive index layer 5D laminated in this order from the side closest to the hard coat layer 4. Each of the first high refractive index layer 5A and the second high refractive index layer 5C has a higher refractive index than each of the first low refractive index layer 5B and the second low refractive index layer 5D.

The refractive indexes of the first high refractive index layer 5A and the second high refractive index layer 5C are, for example, 2.00 or more and 2.60 or less, and preferably 2.10 or more and 2.45 or less. The refractive indexes of the first high refractive index layer 5A and the second high refractive index layer 5C may be the same or different.

Examples of materials for the first high refractive index layer 5A and the second high refractive index layer 5C include niobium pentoxide (Nb₂O₅, refractive index 2.33), titanium oxide (TiO₂, refractive index 2.33 to 2.55), tungsten oxide (WO₃, refractive index 2.2), cerium oxide (CeO₂, refractive index 2.2), tantalum pentoxide (Ta₂O₅, refractive index 2.16), zinc oxide (ZnO, refractive index 2.1), indium tin oxide (ITO, refractive index 2.06), zirconium oxide (ZrO₂, refractive index 2.2), and the like. The first high refractive index layer 5A and the second high refractive index layer 5C are preferably made of niobium pentoxide. The materials constituting the first high refractive index layer 5A and the second high refractive index layer 5C may be the same or different.

The refractive indexes of the first low refractive index layer 5B and the second low refractive index layer 5D are, for example, 1.20 or more and 1.60 or less, and preferably 1.30 or more and 1.50 or less. The refractive indexes of the first low refractive index layer 5B and the second low refractive index layer 5D may be the same or different.

The first low refractive index layer 5B and the second low refractive index layer 5D contain, for example, an oxide of Si. The first low refractive index layer 5B and the second low refractive index layer 5D are layers containing, for example, SiO₂ (an oxide of Si) as a main component. The oxide of Si is easily available and has an advantage in terms of cost. A single layer of SiO₂ is colorless and transparent. In this embodiment, the main component is a component that occupies 50% by mass or more of the components contained in the layer. The refractive indexes of the first low refractive index layer 5B and the second low refractive index layer 5D may be the same or different.

When the first low refractive index layer 5B and the second low refractive index layer 5D contain an oxide of Si as the main component, they may contain less than 50% by mass of another element. A content of the elements other than the oxide of Si is preferably 10% or less. The other elements are, for example, Na, Zr, Al, and N. Na increases durability of the first low refractive index layer 5B and the second low refractive index layer 5D. Zr, Al, and N increase hardness and alkali resistance of the first low refractive index layer 5B and the second low refractive index layer 5D.

The stain-resistant layer 6 is in contact with a surface of the optical functional layer 5 on the side opposite to a surface thereof in contact with the hard coat layer 4. The stain-resistant layer 6 prevents the optical functional layer 5 from being soiled or damaged. In addition, the stain-resistant layer 6 curbs wear of the optical functional layer 5 caused by sliding of a pen when it is applied to a touch panel or the like.

The stain-resistant layer 6 is, for example, a fluorine-based organic compound. The fluorine-based organic compound is, for example, a compound containing a fluorine-modified organic group and a reactive silyl group (for example, an alkoxysilane). Commercially available products that can be used for the stain-resistant layer 6 include Optool DSX (manufactured by Daikin Co., Ltd.) and KY-100 series (manufactured by Shin-Etsu Chemical Co., Ltd.).

A thickness of the stain-resistant layer 6 is, for example, 1 nm or more and 20 nm or less, and preferably 3 nm or more and 10 nm or less. When the thickness of the stain-resistant layer 6 is 1 nm or more, sufficient abrasion resistance can be ensured when the laminate is used for a touch panel or the like. Furthermore, when the thickness of the stain-resistant layer 6 is 20 nm or less, a time required for vapor deposition is short, and thus the layer can be produced efficiently.

The stain-resistant layer 6 may contain additives such as a light stabilizer, an ultraviolet absorber, a colorant, an antistatic agent, a lubricant, a leveling agent, an antifoaming agent, an antioxidant, a flame retardant, an infrared absorber, and a surfactant, as necessary.

The protective layer 7 is a layer that protects the film during transportation and storage. The protective layer 7 may be, for example, a layer having a base material such as polypropylene, polyethylene, or polyethylene terephthalate, and an adhesive layer containing natural rubber, synthetic rubber, acrylic resin, or the like as a main component.

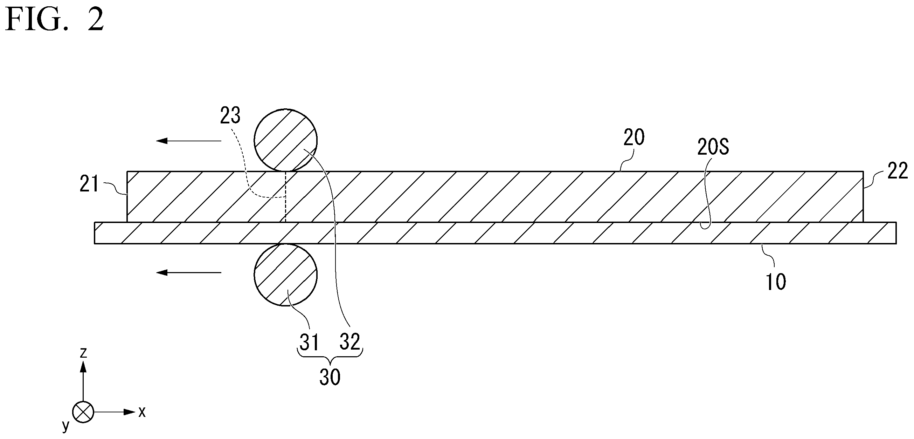

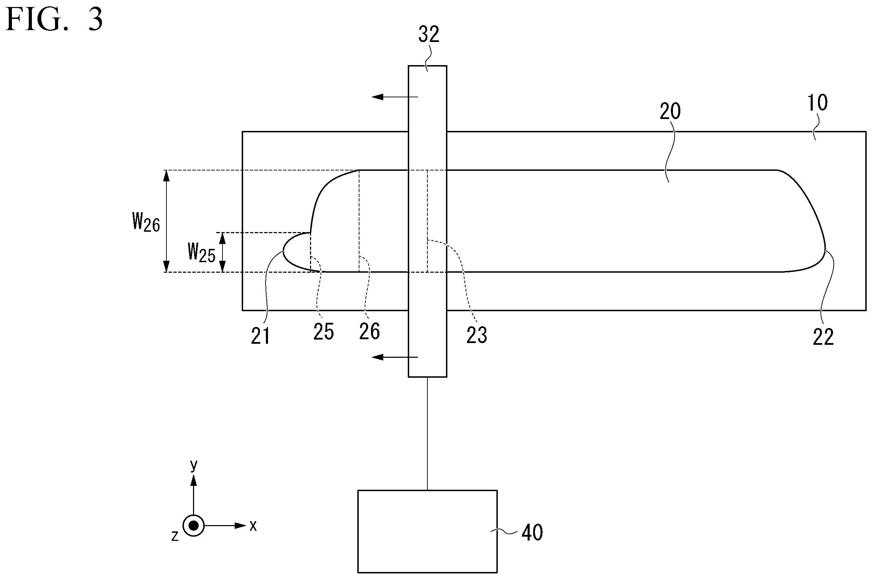

FIG. 2 is a cross-sectional view for describing a first step in the method for producing a laminate according to this embodiment. FIG. 3 is a plan view for describing the first step in the method for producing a laminate according to this embodiment.

In the first step, the lamination film 10 is first pressed against a first intermediate point 23 of the substrate 20 using the pressing tool 30. The first intermediate point 23 is between a first end 21 and a second end 22 of the substrate 20 in the x direction. The first end 21 and the second end 22 are both ends of the substrate 20 in the x direction. An operation of the pressing tool 30 is controlled by, for example, a control unit 40. The control unit 40 includes, for example, an operating mechanism that moves the pressing tool 30 relative to the substrate 20, and a processor that instructs an operation of the operating mechanism.

There is no particular limitation on the pressing tool 30 as long as it can apply pressure in a thickness direction of the lamination film 10 and the substrate 20. The pressing tool 30 is, for example, a roller of which a width in the y direction is wider than that of the substrate 20. The pressing tool 30 moves in the x direction. The pressing tool 30 is, for example, a bonding roller having a first roller 31 and a second roller 32. The first roller 31 comes into contact with the lamination film 10 during pressing. The second roller 32 comes into contact with the substrate 20 during pressing. Either the first roller 31 or the second roller 32 may be omitted. When the bonding roller has a first roller 31 and a second roller 32, even though a lamination surface 20S of the substrate 20 is curved, the lamination film 10 can be firmly bonded to the substrate 20 by moving the bonding roller along the lamination surface 20S.

In the first step, a bonding pressure with which the pressing tool 30 is pressed against the lamination film 10 or the substrate 20 is, for example, 0.1 MPa or more and 0.5 MPa or less, and preferably 0.3 MPa or more and 0.4 MPa or less.

The pressing tool 30 may be stopped when it reaches the first end 21 from the first intermediate point 23. The pressing tool 30 may also advance beyond the first end 21 in a travel direction (the -x direction). When the pressing tool 30 rides over a step between the lamination film 10 and the substrate 20, cracks are likely to occur in the lamination film 10, but when it descends the step, cracks are unlikely to occur, and there is no problem even when the pressing tool 30 advances beyond the first end 21 in the travel direction.

The bonding pressure per unit time between the lamination film 10 and the substrate 20 may be different between the first intermediate point 23 and the first end 21. The bonding pressure per unit time between the lamination film 10 and the substrate 20 is a pressure per unit time applied to the pressing tool 30 against the lamination film 10 or the substrate 20. For example, the bonding pressure per unit time at the first intermediate point 23 may be greater than the bonding pressure per unit time at the first end 21. By not applying a large pressure to the vicinity of the first end 21 at which cracks are likely to occur, the occurrence of cracks in the lamination film 10 can be further curbed.

Furthermore, when the width of the substrate 20 in the y direction is not constant, the bonding pressure per unit time between the lamination film 10 and the substrate 20 may be changed according to the width of the substrate 20 in the y direction. For example, as shown in FIG. 3, when the width of the substrate 20 in the y direction is not constant, the bonding pressure per unit time is changed at a first portion 25 and a second portion 26. A width W₂₅ of the first portion 25 in the y direction is narrower than a width W₂₆ of the second portion 26 in the y direction. In this case, the bonding pressure per unit time at the first portion 25 is set to be smaller than the bonding pressure per unit time in the second portion 26. By changing the bonding pressure per unit time in accordance with a shape of the substrate 20, it is possible to prevent a large pressure from being applied locally and thus to prevent cracks from occurring in the lamination film 10.

The bonding pressure per unit time may be controlled by a moving speed of the pressing tool 30, a pressing pressure of the pressing tool 30, and the like. For example, when the pressing tool 30 is a bonding roller, the moving speed, the pressing pressure, and the like of the pressing tool 30 can be controlled by a gap between the first roller 31 and the second roller 32 and rotation speeds of the first roller 31 and the second roller 32.

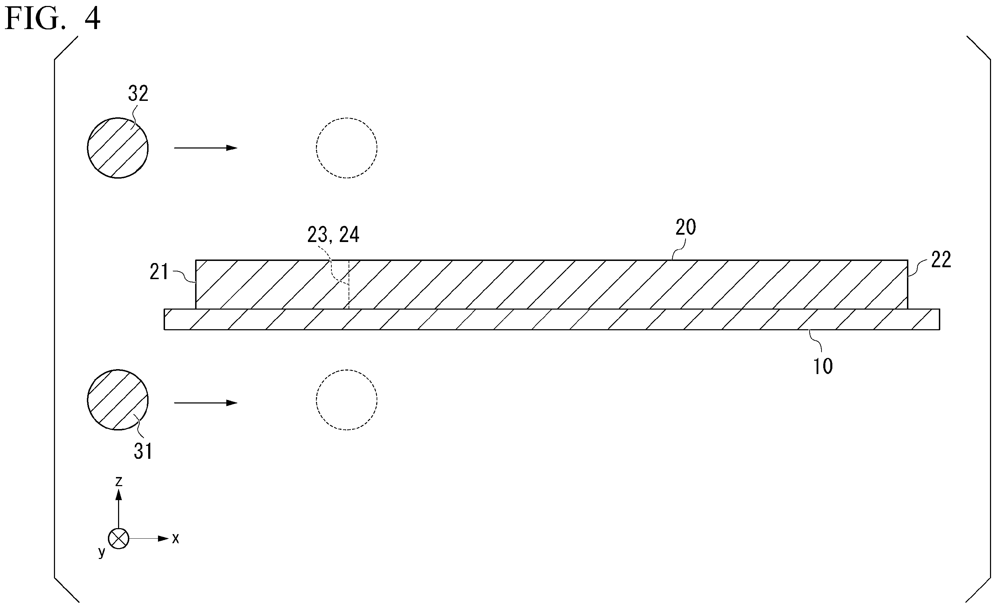

FIG. 4 is a cross-sectional view for describing a second step in the method for producing a laminate according to this embodiment.

In the second step, the pressing tool 30 is moved to a second intermediate point 24 without being pressed against the lamination film 10. The operation of the pressing tool 30 is controlled by the control unit 40, for example. The second intermediate point 24 is located between the first end 21 and the second end 22 in the x-direction. The second intermediate point 24 will be described in detail below.

"The pressing tool 30 is not pressed against the lamination film 10" means that no bonding pressure is applied between the lamination film 10 and the substrate 20. When the pressing tool 30 is in contact with the lamination film 10 but no bonding pressure is applied, it can be said that the pressing tool 30 is not pressed against the lamination film 10. For example, in the second step, the pressing tool 30 is separated from the lamination film 10 and the substrate 20. For example, the first roller 31 is separated from the lamination film 10, and the second roller 32 is separated from the substrate 20.

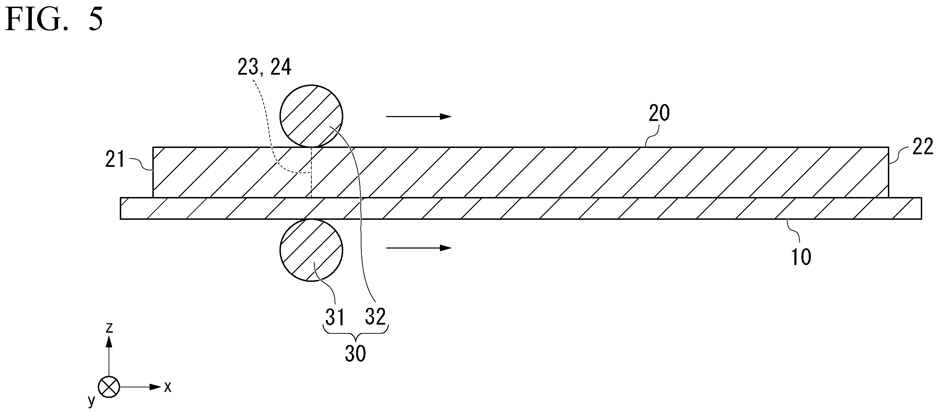

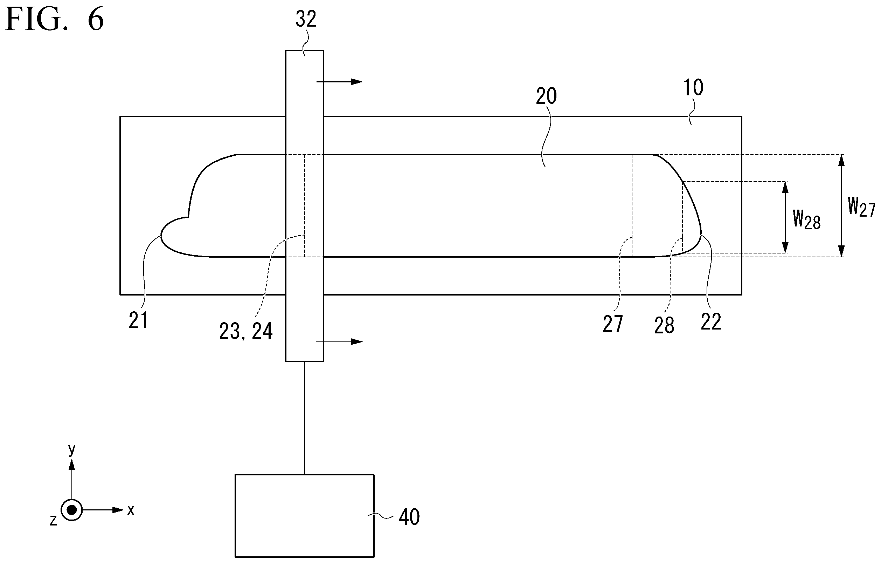

FIG. 5 is a cross-sectional view for describing a third step in the method for producing a laminate according to this embodiment. FIG. 6 is a plan view for describing the third step in the method for producing a laminate according to this embodiment.

In the third step, the pressing tool 30 is pressed against the lamination film 10 again. The pressing tool 30 is pressed against the second intermediate point 24 of the substrate 20. Then, in the third step, the pressing tool 30 is moved from the second intermediate point 24 toward the second end 22. The operation of the pressing tool 30 is controlled by the control unit 40, for example.

As shown in FIG. 6, the second intermediate point 24 may coincide with the first intermediate point 23. In this case, a position at which pressing starts in the first step and a position at which pressing starts in the third step coincide with each other.

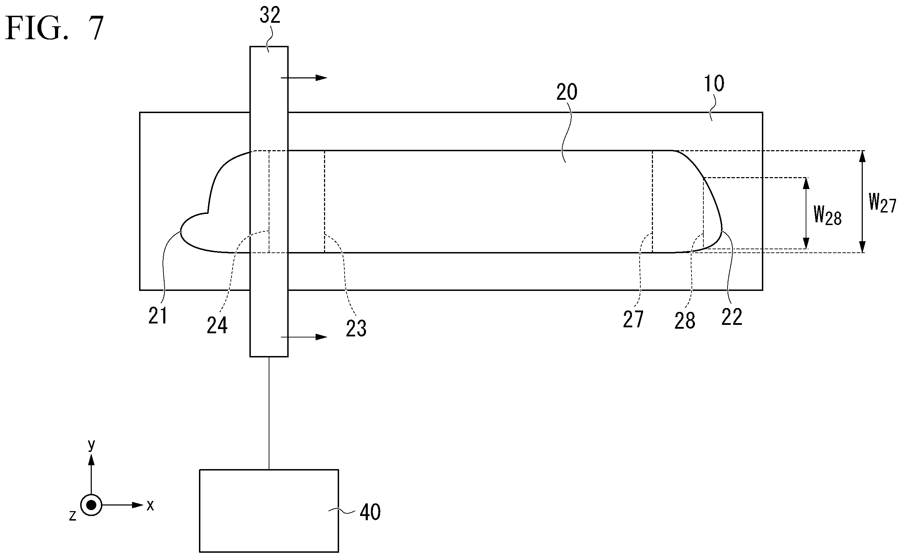

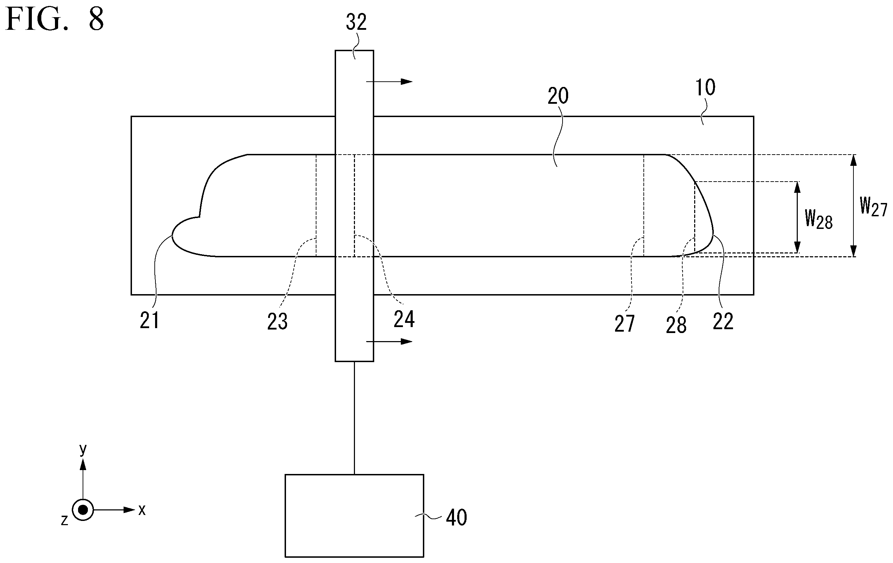

Also, as shown in FIGS. 7 and 8, the second intermediate point 24 does not have to coincide with the first intermediate point 23. FIGS. 7 and 8 are plan views for describing another example of the third step in the method for producing a laminate according to this embodiment.

In the example shown in FIG. 7, the second intermediate point 24 is closer to the first end 21 than the first intermediate point 23. In this case, a portion to which the bonding pressure is applied in the first step and a portion to which the bonding pressure is applied in the third step partially overlap each other. When the portions to which the bonding pressure is applied in the first step and the third step overlap, it is possible to more effectively prevent air bubbles and the like from becoming trapped between the lamination film 10 and the substrate 20.

In an example shown in FIG. 8, the second intermediate point 24 is closer to the second end 21 than the first intermediate point 23. That is, there is a space between the first intermediate point 23 and the second intermediate point 24. No bonding pressure is applied to a region between the first intermediate point 23 and the second intermediate point 24 in both the first step and the third step. Even when no bonding pressure is applied to the region between the first intermediate point 23 and the second intermediate point 24, this region is naturally bonded by going through the first step and the third step. In this case, even when precision of the operation of the pressing tool 30 is low, it is possible to sufficiently cope therewith, and the device for producing a laminate can be made inexpensive. A distance between the first intermediate point 23 and the second intermediate point 24 is, for example, 10 mm or less, and preferably 3 mm or less.

In the third step, the bonding pressure with which the pressing tool 30 is pressed against the lamination film 10 or the substrate 20 is, for example, 0.1 MPa or more and 0.5 MPa or less, and preferably 0.3 MPa or more and 0.4 MPa or less.

The pressing tool 30 may be stopped when it reaches the second end 22 from the second intermediate point 24. The pressing tool 30 may also advance beyond the second end 22 in the travel direction (the +x direction). When the pressing tool 30 rides over the step between the lamination film 10 and the substrate 20, cracks are likely to occur in the lamination film 10, but when it descends the step, cracks are unlikely to occur, and there is no problem even when the pressing tool 30 advances in the travel direction beyond the second end 22.

The bonding pressure per unit time between the lamination film 10 and the substrate 20 may be different between the second intermediate point 24 and the second end 22. For example, the bonding pressure per unit time at the second intermediate point 24 may be greater than the bonding pressure per unit time at the second end 22. By not applying a large pressure to the vicinity of the second end 22 at which cracks are likely to occur, the occurrence of cracks in the lamination film 10 can be further curbed.

Furthermore, when the width of the substrate 20 in the y direction is not constant, the bonding pressure per unit time between the lamination film 10 and the substrate 20 may be changed according to the width of the substrate 20 in the y direction. For example, as shown in FIGS. 6 to 8, when the width of the substrate 20 in the y direction is not constant, the bonding pressure per unit time is changed at each of the first portion 28 and the second portion 27. A width W₂₈ of the first portion 28 in the y direction is narrower than a width W₂₇ of the second portion 27 in the y direction. In this case, the bonding pressure per unit time at the first portion 28 is set to be smaller than the bonding pressure per unit time at the second portion 27. By changing the bonding pressure per unit time in accordance with the shape of the substrate 20, it is possible to prevent a large pressure from being applied locally, and thus to prevent cracks from occurring in the lamination film 10.

In the method for producing a laminate according to this embodiment, when the pressing tool 30 rides over the step between the substrate 20 and the lamination film 10, no pressure is applied between the substrate 20 and the lamination film 10. Cracks in the lamination film 10 occur when the pressing tool 30 comes into contact with the lamination film 10, distortion is caused in the organic layer represented by the base film 3, and this distortion then applies stress to the inorganic layer represented by the optical functional layer 5. When the pressing tool 30 rides over the step between the substrate 20 and the lamination film 10, a large stress is generated in the lamination film 10. As described above, in the method for producing a laminate according to this embodiment, when the pressing tool 30 rides over the step between the substrate 20 and the lamination film 10, no pressure is applied between the substrate 20 and the lamination film 10, and thus it is possible to prevent cracks from occurring in the lamination film 10.

### "Device for producing laminate"

A device for producing a laminate according to this embodiment includes the pressing tool 30 and the control unit 40. The device for producing a laminate will be described with reference to FIG. 3.

The pressing tool 30 presses the lamination film 10 against the substrate 20. There is no particular limitation on the pressing tool 30 as long as it can apply pressure in the thickness direction of the lamination film 10 and the substrate 20.

The control unit 40 controls relative positions of the pressing tool 30 and the substrate 20. The control unit 40 is, for example, a microprocessor. The control unit 40 controls the operation of the pressing tool 30 based on a program stored in the microprocessor. The control unit 40 controls the pressing tool 30 so that the pressing tool 30 performs a first operation, a second operation, and a third operation, for example.

The first operation is an operation corresponding to the first step described above. In the first operation, the first intermediate point 23 of the substrate 20 is pressed using the pressing tool 30, and the pressing tool 30 is moved from the first intermediate point 23 toward the first end 21 while being pressed against the lamination film 10.

The second operation is an operation corresponding to the second step described above. In the second operation, the pressing tool 30 is moved to the second intermediate point 24 without being pressed against the lamination film 10. The second intermediate point 24 may or may not coincide with the first intermediate point 23.

The third operation is an operation corresponding to the third step described above. In the third operation, the pressing tool 30 is moved from the second intermediate point 24 toward the second end 22 while being pressed against the lamination film 10 .

The device for producing a laminate according to this embodiment can easily realize the method for producing a laminate described above. Therefore, when a laminate consisting of the lamination film 10 and the substrate 20 is produced using the device for producing a laminate according to this embodiment, cracks are less likely to occur in the lamination film 10.

Although the preferred embodiment of the present invention has been described in detail above, the present invention is not limited to the specific embodiment, and various modifications and changes are possible within the scope of the gist of the present invention described in the claims.

### REFERENCE SIGNS LIST

1 Releases layer
2 Adhesive layer
3 Base film
4 Hard coat layer
5 Optical functional layer
5A First high refractive index layer
5B First low refractive index layer
5C Second high refractive index layer
5D Second low refractive index layer
6 Stain-resistant layer
7 Protective layer
10 Lamination film
20 Substrate
20S Bonding surface
21 First end
22 Second end
23 First intermediate point
24 Second intermediate point
25, 28 First portion
26, 27 Second portion
30 Pressing tool
31 First roller
32 Second roller
40 Control unit

## Claims

1. A method for producing a laminate, comprising:
a first step of pressing a lamination film having a base film and an inorganic layer laminated on the base film against a first intermediate point between a first end and a second end of a substrate using a pressing tool, and moving the pressing tool from the first intermediate point toward the first end while pressing the pressing tool against the lamination film;
a second step of moving the pressing tool to a second intermediate point between the first end and the second end without pressing the pressing tool against the lamination film; and
a third step of moving the pressing tool from the second intermediate point toward the second end while pressing the pressing tool against the lamination film.

2. The method for producing a laminate according to claim 1, wherein the second intermediate point coincides with the first intermediate point.

3. The method for producing a laminate according to claim 1, wherein the second intermediate point is closer to the first end than the first intermediate point.

4. The method for producing a laminate according to claim 1, wherein the second intermediate point is closer to the second end than the first intermediate point.

5. The method for producing a laminate according to claim 1, wherein a bonding pressure per unit time between the lamination film and the substrate is greater at the first intermediate point than at the first end.

6. The method for producing a laminate according to claim 1, wherein a bonding pressure per unit time between the lamination film and the substrate is greater at the second intermediate point than at the second end.

7. The method for producing a laminate according to claim 1, wherein the substrate has a width that is not constant in a second direction orthogonal to a first direction in which the first end and the second end are connected,
a first portion has a width in the second direction that is smaller than that of a second portion, and
a bonding pressure per unit time between the lamination film and the substrate is smaller at the first portion than at the second portion.

8. The method for producing a laminate according to claim 1, wherein the pressing tool includes a first roller configured to come into contact with the lamination film and a second roller configured to come into contact with the substrate.

9. The method for producing a laminate according to claim 1, wherein, in the first step and the third step, the bonding pressure applied by the pressing tool to bond the lamination film and the substrate is 0.1 MPa or more and 0.5 MPa or less.

10. A device for producing a laminate, comprising:
a pressing tool configured to press a lamination film having a base film and an inorganic layer laminated on the base film against a substrate; and
a control unit configured to control a relative position between the pressing tool and the substrate,
wherein the control unit performs a first operation of pressing the pressing tool against a first intermediate point between a first end and a second end of the substrate, and moving the pressing tool from the first intermediate point toward the first end while pressing the pressing tool against the lamination film, a second operation of moving the pressing tool to a second intermediate point between the first end and the second end without pressing the pressing tool against the lamination film, and a third operation of moving the pressing tool from the second intermediate point toward the second end while pressing the pressing tool against the lamination film.
